# EUROPÄISCHE PATENTANMELDUNG

(11) **EP 1 193 130 A2**
(43) Veröffentlichungstag der Anmeldung: **03.04.2002**
(21) Anmeldenummer: 01120927.7
(22) Anmeldetag: 31.08.2001
(51) Int. Cl.: B60R 13/02, B60R 21/04

(54) **Deformationselement und Dokumentationssystem für Deformationselemente zur Verwendung in einem Fahrzeug**

(30) Priorität: 29.09.2000 DE 10048288
(71) Anmelder: AUDI AG, 85045 Ingolstadt (DE)
(72) Erfinder: Hollasch, Christian, 85080 Gaimersheim (DE); Jantzen, Frank, 85049 Ingolstadt (DE)

(57) **Zusammenfassung**

Die Erfindung betrifft ein Deformationselement (1) für die Verwendung in einem Fahrzeug, das mindestens ein passives, induktives Identifikationselement (2), das eine Nur-Lesefunktion aufweist, als integralen Bestandteil umfasst. Weiterhin bezieht sich die Erfindung auf ein Dokumentationssystem für Deformationselemente, das mindestens ein Deformationselement (1I, 1II) mit einem passiven, induktiven Identifikationselement (2I, 2II), das eine Nur-Lesefunktion aufweist, als integralen Bestandteil umfasst, und eine zentrale Einheit (14) aufweist, in der die in den einzelnen Identifikationselementen (2I, 2II) abgelegte Information abfragbar und bearbeitbar ist.

## Beschreibung

Die Erfindung betrifft Deformationselemente und ein Dokumentationssystem für Deformationselemente zur Verwendung in einem Fahrzeug.

Bei Fahrzeugen werden eine Reihe von Bauelementen eingesetzt, die zur Erfüllung von Sicherheitskriterien, insbesondere bei Crash-Situationen, dienen sollen. Diese Bauelemente sind so ausgestaltet, dass sie bei einer Crash-Situation, beispielsweise einem Auffahrunfall, zumindest einen Teil der Aufprall-Energie aufnehmen können und damit Verletzungen von Insassen weitgehend verhindern können. Solche Deformationselemente werden beispielsweise im Bereich des hinteren Dachrahmens eingesetzt, um die Kopfaufschlagkriterien nach FMVSS 201 mit ausreichender Sicherheit erfüllen zu können. Nach FMVSS 201 muss die Kopfbelastung, gemessen am HIC(d) (Head Injury Criterion), beim Aufprall einer Kopfform auf bestimmte Punkte im Fahrzeuginnenraum kleiner als 1000 sein.

Solche Elemente bestehen herkömmlicherweise aus unterschiedlichen Kunststoffschäumen (z.B. EPP oder PU), allerdings finden auch Rippenpakete aus spritzgegossenem Kunststoff, Metallwaben, Flexrohre, Deformationsbleche und dergleichen Verwendung. Aufgrund der steigenden Zahl der Deformationselemente wird eine Dokumentation in der Montage (beim Lieferanten oder beim Hersteller des Fahrzeuges) immer schwieriger. Es ist allerdings für die Sicherheit der Passagiere und aus haftungsrechtlicher Sicht für den Hersteller von Fahrzeugen unerlässlich, eine lückenlose Dokumentation zu erstellen. Nachdem die Fahrzeuge fertig gestellt wurden, ist es nicht mehr möglich, das Vorhandensein und den korrekten Einbau der Deformationselemente mit optischen Mitteln zu überprüfen, da die Elemente meist verdeckt eingebaut werden. Beim Einbau kann es aber beispielsweise dazu kommen, dass Deformationselemente, die gar nicht für eine bestimmte Position vorgesehen waren, dennoch in diese eingebaut werden. So werden teilweise zu kleine Deformationselemente eingebaut, oder zu große Deformationselemente werden in die falsche Position hineingepresst. Solche Fehler müssen auch nach dem Einbau noch kontrollierbar sein.

Der Erfindung liegt daher die Aufgabe zugrunde ein Deformationselement zu schaffen, das einfach herzustellen ist und es erlaubt, dieses auch nach dem Einbau zu identifizieren und die Zugehörigkeit von Daten zu dem Deformationselement sicherzustellen.

Der Erfindung liegt die Erkenntnis zugrunde, dass diese Aufgabe durch ein Deformationselement gelöst werden kann, das eine berührungslose Identifikation erlaubt, das in herkömmlicherweise hergestellt werden kann und eine Veränderung der Identifikationsmerkmale nicht zulässt.

Diese Aufgabe wird erfindungsgemäß durch ein Deformationselement für die Verwendung in einem Fahrzeug gelöst, das mindestens ein passives, induktives Identifikationselement, das eine Nur-Lesefunktion aufweist, als integralen Bestandteil umfasst. Als Deformationselemente werden solche Fahrzeugteile bezeichnet, die energieabsorbierende Aufprallelemente, z.B. in den Türen, sowie verstärkten Karosseriestrukturen an Seitenschwellen und Dachsäulen, darstellen. Diese Teile werden auch als Paddings bezeichnet. Das erfindungsgemäße Deformationselement weist als einen integralen Bestandteil ein Identifikationselement auf.

Dieses ist somit unverlierbar mit dem Deformationselement verbunden. Es ist daher nicht möglich, das Identifikationselement ohne Zerstörung des Deformationselementes zu entfernen. Dadurch wird sichergestellt, dass eine Manipulation, z.B. der Austausch von Identifikationselementen, verhindert werden kann.

Weiterhin ist das Identifikationselement gemäß der Erfindung so ausgelegt, dass es eine Nur-Lese- (Read only-) Funktion aufweist, d.h. dass gegebenenfalls in dem Identifikationselement gespeicherte Daten nur abgefragt werden können, oder das Identifikationselement auf andere Art, z.B. aufgrund seiner Beschaffenheit, Auskunft über das Deformationselement, in dem es integriert ist, gibt. Hingegen ist es bei dem Identifikationselement gemäß der Erfindung nicht möglich, dieses und die gegebenenfalls darauf gespeicherten Daten zu verändern oder weitere Daten nach Fertigstellung des Deformationselementes darauf abzulegen. Dem Identifikationselement werden bei der Herstellung des Deformationselements Daten zugeordnet, die entweder darauf gespeichert, oder durch Aufnahme in eine Liste, in der ein Bezug zwischen dem Identifikationselement und den Merkmalen des Deformationselementes hergestellt wird, dokumentiert werden. Dieses Identifikationselement wird dann in das entsprechende Deformationselement eingebracht. Nach der Fertigstellung des Deformationselementes ist es somit weder für den Fahrzeughersteller, noch für z.B. den Kundendienst möglich, die Daten - eventuell versehentlich - zu ändern. Da das Identifikationselement einen integralen Bestandteil des Deformationselementes darstellt, wird das Identifikationselement bereits während der Fertigung des Deformationselementes in dieses ein- bzw. aufgebracht. Im Gegensatz zu Identifikationselementen, die während der Montage eines Fahrzeuges auf bereits fertiggestellte Deformationselemente aufgebracht werden, ist eine versehentliche fehlerhafte Zuordnung eines Identifikationselementes zu einem Deformationselement bei dem erfindungsgemäßen Deformationselement ausgeschlossen. Diese Sicherung der Daten und deren Zuordnung zu Deformationselementen ist aus sicherheitstechnischen Gründen unerlässlich. Es ist gleichzeitig aufgrund der passiven Ausführung des Identifikationselementes nicht notwendig, eine Stromversorgung für das Identifikationselement in dem Deformationselement vorzusehen. Das Identifikationselement ist als Informationsträger ausgestaltet, das passiv agiert, d.h. von dem Daten oder Informationen abgerufen werden, das aber diese nicht ohne äußere Anregung abgeben muss. Das Vorsehen einer Energieversorgung in dem Deformationselement ist daher bei dem erfindungsgemäß verwendeten passiven Identifikationselement nicht notwendig. Somit kann das Identifikationselement eine sehr geringe Größe aufweisen und beeinflusst damit die Eigenschaften, insbesondere die Fähigkeit des Deformationselementes zur Energieabsoprtion nicht maßgeblich.

In einer Ausführungsform ist das Identifikationselement in dem Deformationselement unlösbar eingeschäumt. Bei Deformationselementen, die zur Energieabsorption meist aus Kunststoff, insbesondere Kunststoffschäumen bestehen, kann das Identifikationselement, gegebenenfalls nach dem Einspeichern von Daten, bei der Herstellung in das Deformationselement eingebracht werden. Es kann somit von äußeren Krafteinwirkungen und Temperaturänderungen während des Einbaus in das Fahrzeug und im fertiggestellten Fahrzeug zusätzlich geschützt werden.

Das Identifikationselement kann aber auch unlösbar auf dem Deformationselement angebracht sein. Bei dieser Ausführungsform kann das Identifikationselement beispielsweise auf das Deformationselement aufgeklebt werden. Diese Ausführungsform bietet sich beispielsweise bei Deformationselementen, insbesondere Metalldeformationselementen, an, die in Teilen des Fahrzeuges verwendet werden, die durch eine Verkleidung verdeckt werden und bei denen so der Zugriff auf das oder das unbeabsichtigte Berühren des Identifikationselementes verhindert wird. Beispielsweise kann ein Identifikationselement auf ein Deformationselement aufgeklebt werden, das in der Dachkonstruktion des Fahrzeuges verwendet werden soll. Dieses Deformationselement ist von dem Fahrgastraum zumindest durch den Fahrzeughimmel getrennt und das Identifikationselement ist somit geschützt.

Gemäß einer bevorzugten Ausführungsform stellt das Identifikationselement einen Transponder dar. Ein Transponder besteht in der Regel aus einem Datenträger zur Speicherung von Daten, sowie einer Spule oder Antenne zur Aufnahme von Energie und zur Übertragung der gespeicherten Daten. Auf dem Datenträger werden, bei der Herstellung des Deformationselementes, Merkmale des Deformationselementes gespeichert und können von diesem abgerufen werden. Mit dem Datenträger wirkt eine Antenne oder Spule zusammen, die zum Empfang eines Signals, in der Regel eines Feldes eines Lesegerätes, dient und über die die Übertragung von Daten von dem Identifikationselement zu einer Leseeinheit erfolgen kann. Durch die Verwendung von handelsüblichen Transpondern ist die Programmierung von ca. 5 Milliarden Kombinationen möglich und es kann somit jedem Fahrzeug für jeden Verbaupunkt, d.h. für jede Position in dem Fahrzeug, das richtige Deformationselement zugeordnet werden. Darüber hinaus sind Transponder derart ausgestaltet, dass sie unempfindlich gegenüber Rauch, Dampf, Flüssigkeiten, diverse Säuren, Verschmutzungen und in gewissem Rahmen auch gegenüber Beschädigung und Wärmeeinflüssen sind. Ein Ausbau des passiven Transponders ist darüber hinaus nicht erforderlich, da diese in der Regel eine nahezu unbegrenzte Lebensdauer haben, da sie ihre Energie aus einem Frequenzfeld, das durch ein Lesegerät erzeugt wird, beziehen und daher keine Batterie oder andere Stromversorgung benötigen.

In einer weiteren bevorzugten Ausführungsform stellt das Identifikationselement eine Spule dar. Bei einer solchen Ausführungsform können in dem Identifikationselement keine speziellen Daten gespeichert werden. Vielmehr wird durch die Induktivität der verwendeten Spule proportional zur Drahtlänge die Zuordnung des Deformationselementes beim Auslesen ermöglicht. Diese Ausführungsform stellt eine erhebliche konstruktive Vereinfachung dar, da in dem Deformationselement lediglich eine Spule angeordnet werden muss. Die Zuordnung der entsprechenden Spulen zu bestimmten Deformationselementen und damit von Merkmalen zu den Deformationselementen kann bei dieser Ausführungsform manuell durch eine Liste oder aber automatisch erfolgen, indem die Leseeinheit, die eine Spule aufgrund ihrer Induktivität als eine spezifische Spule erkennt, die zu dieser Spule vorgegebenen Daten aus einer Datenbank entnimmt.

Die Erfindung betrifft weiterhin ein Dokumentationssystem, das mindestens ein Deformationselement mit einem passiven, induktiven Identifikationselement, das eine Nur-Lesefunktion aufweist, als integralen Bestandteil umfasst, und eine zentrale Einheit aufweist, in der in den einzelnen Identifikationselementen abgelegte Information abfragbar und bearbeitbar ist. Ein solches Dokumentationssystem erlaubt es auch bei einem fertiggestellten Fahrzeug nachprüfen zu können, ob alle Deformationsteile vorschriftsgemäß vorhanden und an der richtigen Stelle eingebaut sind. Die zentrale Einheit kann eine Leseeinrichtung und gegebenenfalls eine Verarbeitungseinheit umfassen. Je nach Ausführungsform der zentralen Einheit werden die in dem Deformationselement gespeicherten Daten beispielsweise abgefragt und abgespeichert, abgefragt und mit vorgegebenen Daten verglichen oder abgefragt und optisch dargestellt. Die zentrale Einheit kann hierbei eine stationäre oder eine mobile Einheit darstellen. Im ersten Fall kann es sich beispielsweise um eine im Fahrzeug selber eingebaute Einheit handeln, die zum einen ein Signal ausgibt, durch das die Antennen oder Spulen der im Fahrzeug eingebauten Deformationselemente aktiviert werden, und zum anderen die von den Identifikationselementen empfangenen Angaben verarbeitet und beispielsweise gegenüber einer Soll-Bestimmung vergleicht. Ist die zentrale Einheit eine mobile Einheit kann sie je nach Bedarf, z.B. bei der Endkontrolle der Montage eines Fahrzeuges oder nach Beendigung der Reparaturarbeiten, an das Fahrzeug herangeführt, insbesondere in das Fahrzeug eingebracht werden.

Die zentrale Einheit kann erfindungsgemäß mit einer Wegfahrsperre verbunden sein. Bei dieser Ausführungsform kann, beispielsweise nach der Behandlung des Fahrzeuges im Kundendienst, sichergestellt werden, dass sämtliche vorgeschriebenen Deformationselemente eingebaut sind. Hierzu kann die Zentraleinheit die vorgegebenen Soll-Daten mit den von den einzelnen Deformationselementen empfangenen Daten vergleichen und das Wegfahren des Fahrzeuges bei Fehlen oder fehlerhaftem Einbau eines Deformationselementes behindern. Die Zentraleinheit kann mit herkömmlichen elektronischen Wegfahrsperren verbunden bzw. gekoppelt werden.

Die Erfindung wird im Folgenden anhand der beiliegenden Figuren, die Ausführungsbeispiele des Gegenstandes der Erfindung darstellen, beschrieben.

Es zeigen:
Figuren 1a und 1b: eine perspektivische und eine schematische Schnittansicht eines Deformationselementes mit eingeschäumtem Identifikationselement gemäß einer Ausführungsform der Erfindung;
Figuren 2a und 2b: eine perspektivische und eine schematische Schnittansicht eines Deformationselementes mit aufgeklebtem Identifikationselement gemäß einer Ausführungsform der Erfindung;
Figur 3: eine schematische Schnittansicht einer Dachkonstruktion mit einem Deformationselement gemäß einer Ausführungsform der Erfindung;
Figur 4: ein Blockdiagramm des Aufbaus und der Funktionsweise eines Deformationselementes der Erfindung mit integriertem Identifikationselement, das einen Transponder darstellt;
Figur 5: ein Blockdiagramm des Aufbaus und der Funktionsweise eines Deformationselementes der Erfindung mit einem Identifikationselement, das eine Spule darstellt;
Fig. 6: eine schematische Darstellung eines Fahrzeugs mit eingebauten Deformationselementen sowie einer zentralen Einheit für ein Dokumentationssystem gemäß der Erfindung;
Figur 7: ein Blockschaltbild des Aufbaus und der Funktionsweise des Dokumentationssystems, gemäß der Erfindung in einem Fahrzeug, wie in Figur 6 gezeigt, mit einer zentralen Einheit, die mit einer Wegfahrsperre verbunden ist.

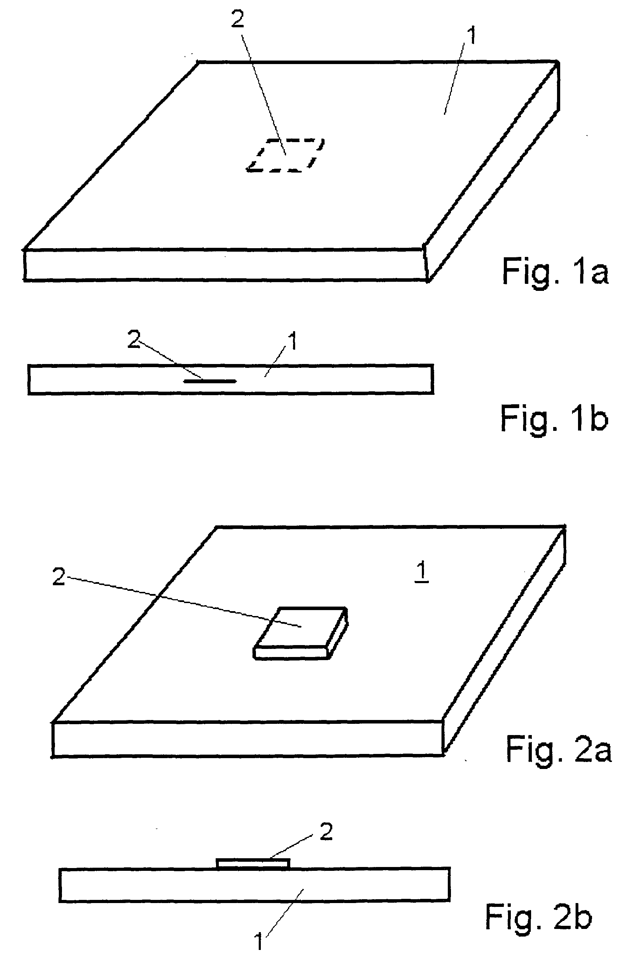

In den Figuren 1a und 1b sind eine perspektivische Ansicht und eine schematische Schnittansicht eines Deformationselementes mit eingeschäumtem Identifikationselement gemäß einer Ausführungsform der Erfindung gezeigt. Das Deformationselement 1 ist als Platte dargestellt, kann aber auch beispielsweise ein Steg, ein Rippenpaket, ein zylindrisches Stabelement, ein freigeformter Volumenkörper, ein Blechteil oder dergleichen sein. In dem Deformationselement 1 ist das Identifikationselement 2 eingebracht. In der dargestellten Ausführungsform ist das Identifikationselement 2 in der Mitte des Deformationselementes 1 angeordnet. Es kann aber auch an einem der Enden oder Seiten des Deformationselementes 1 angebracht sein. Die Position des Identifikationselementes 2 bestimmt sich nach der relativen Position des Deformationselementes 1 zu einer damit kommunizierenden Leseeinheit in dem Fahrzeug. Insbesondere, wenn die Leseeinheit (nicht dargestellt) stationär in dem Fahrzeug angebracht ist, wird das Identifikationselement 2 so in das Deformationselement 1 eingebracht, dass der Abstand zwischen der Leseeinheit und dem Identifikationselement 2 so gering wie möglich ist.

In Figuren 2a und 2b ist eine weitere Ausführungsform des erfindungsgemäßen Deformationselementes 1 gezeigt. Bei dieser Ausführungsform ist das Identifikationselement 2 an einer Oberfläche des Deformationselementes 1 befestigt und unverlierbar mit dieser verbunden. Das Identifikationselement 2 kann beispielsweise auf das Deformationselement 1 aufgeklebt sein. Es kann aber auch so in das Deformationselement 1 eingearbeitet sein, dass in einer Oberfläche des Deformationselementes 1 eine Aussparung gebildet wird, in die das Identifikationselement 2 eingepasst und dort verklebt oder auf eine andere Art befestigt werden kann.

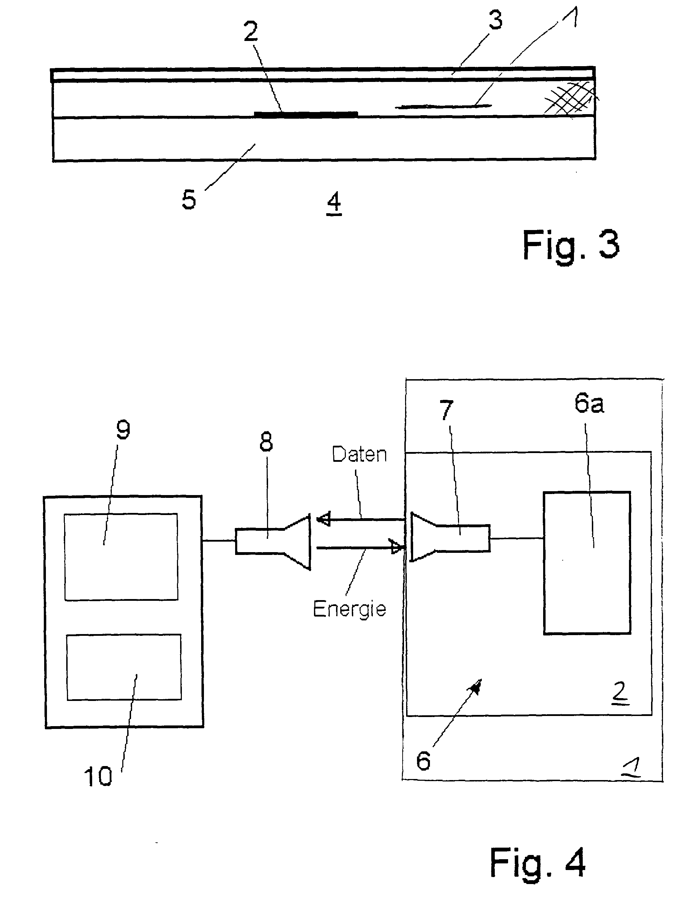

In Figur 3 ist ein erfindungsgemäßes Deformationselement 1 im eingebauten Zustand in einem Fahrzeug gezeigt. Das Außenblech 3 stellt das Außenblech der Dachkonstruktion eines Fahrzeuges dar. Unterhalb des Außenblechs 3 ist das erfindungsgemäße Deformationselement 1 mit dem Identifikationselement 2 angeordnet. Zu dem Fahrgastraum 4 ist das Deformationselement 1 durch den Himmel 5, der durch eine Schaumstoffschicht gebildet sein kann, abgetrennt.

In den Figuren 1 bis 3 ist das Identifikationselement 2 als rechteckiges Element dargestellt. Es kann jegliche Form aufweisen, insbesondere auch die Form einer Röhre, einer Scheibe, eines Knopfes oder dergleichen.

Als Daten, die gemäß der Erfindung in dem Identifikationselement 2 gespeichert werden können, kommen alle physikalischen, mechanischen und chemischen Eigenschaften des Deformationselementes in Betracht, insbesondere dokumentationspflichtige Merkmale, wie das Herstellungsdatum, der Herstellungsort, die laufende Nummer, die Chargennummer des Werkstoffes des Deformationselementes, an dem Deformationselement durchgeführte Verfahrensschritte, die Biegesteifigkeit des Deformationselementes und dergleichen. Das Verfolgen dieser Daten ist insbesondere bei den Deformationselementen, auf die sich die Erfindung bezieht, wesentlich. Wird beispielsweise ein Deformationselement für eine A-Säule eingebaut, muss sichergestellt werden können, dass auf dieses Deformationselement ein Vlies aufgeklebt wurde. Nur wenn ein solches Vlies vorhanden ist, ist davon auszugehen, dass bei einem Aufprall, bei dem ein Airbag zum Einsatz kommt und daher eine Splittergefahr für die Säule besteht, ein Splittern verhindert werden kann.

Es können den Identifikationselementen 2, insbesondere Transpondern, beispielsweise auch laufende Nummern zugeteilt werden, die Auskunft über einzelne Merkmale geben. So kann beispielsweise eine gerade Nummer ein Deformationselement links und eine ungerade ein Deformationselement rechts kennzeichnen.

In Figur 4 ist der Aufbau und die Funktionsweise eines erfindungsgemäßen Deformationselementes 1 als Blockschaltbild gezeigt. Das Deformationselement 1 umfasst in der dargestellten Ausführungsform als Identifikationselement 2 einen Transponder 6. Der Transponder 6 weist einen Datenträger 6a auf. Auf diesen können Daten, die für das Deformationselement 1 relevant sind, gespeichert werden. In dem Identifikationselement 2 ist darüber hinaus ein Übertragungsmittel 7 in Form einer Spule oder einer Antenne angebracht. Das Funktionsprinzip des Identifikationselementes 2 wird im wesentlichen durch die Kopplung einer Antenne 8, die mit einem Lesegerät 9 verbunden ist, mit der Spule oder Antenne 7 des Identifikationselementes 2 bestimmt. In der Antenne 8 des Lesegerätes 9 wird ein Feld erzeugt, dessen Frequenz sich nach der Anwendung des Deformationselementes 1 bestimmt. Bei großer Entfernung des Deformationselementes 1 von dem Lesegerät 9 werden höhere Frequenzen verwendet. Wird die Antenne 8 des Lesegerätes 9 in eine geeignete Entfernung zu der Antenne oder Spule 7 des Identifikationselementes 2 gebracht, so wird durch das Feld des Lesegerätes eine Spannung in der Spule oder Antenne 7 des Identifikationselementes 2 erzeugt. Diese dient als Spannungsversorgung des Transponders 6. Weitere Bestandteile können in dem Identifikationselement vorhanden sein, um z.B. eine Anpassung an Resonanzen durchzuführen. Die Übertragung der Daten, die auf dem Transponder 6 gespeichert sind, zu dem Lesegerät 9 erfolgt mittels bekannter Übertragungsverfahren. An das Lesegerät 9, das die von dem Transponder 6 gespeicherten Daten mittels der Antennen 7 und 8 empfängt, kann eine Verarbeitungseinheit 10, z.B. in Form eines Computers angeschlossen sein. Hier können die empfangenen Daten beispielsweise mit vorgegebenen Soll-Daten verglichen werden.

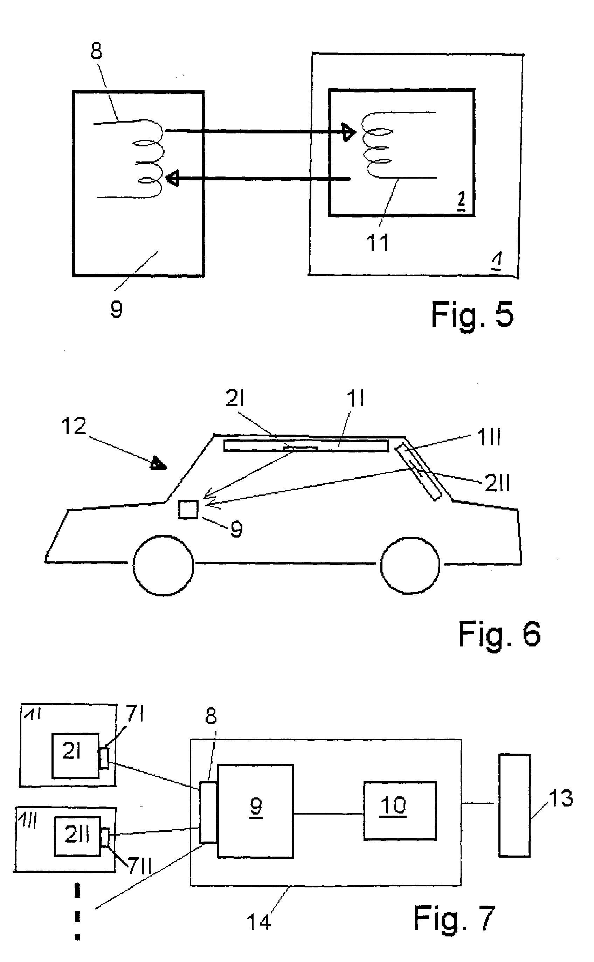

In Figur 5 ist der Aufbau und die Funktionsweise eines Deformationselementes 1 dargestellt, bei dem das Identifikationselement 2 eine Spule 11 darstellt. Bei dieser Ausführungsform kann die Spule 11 des Identifikationselementes 2 ebenfalls durch ein Lesegerät 9 erkannt werden. Da kein Datenträger mit der Spule 11 verbunden ist, kann diese keine spezifischen Daten über das Deformationselement 1 geben. Es kann aber durch die Induktivität, die proportional zur Länge der Spule ist, eine Zuordnung der einzelnen Spulen 11 von verschiedenen Deformationselementen 1 bei der Abtastung gewährleistet werden.

In Figur 6 ist ein Fahrzeug 12 gezeigt, bei dem im Dachbereich und an der D-Säule jeweils ein Deformationselement 1l und 1ll schematisch dargestellt sind. Weitere Deformationselemente können vorgesehen sein. Die Deformationselemente 1l und 1II sind in die Fahrzeugkonstruktion eingebaut. Im Bereich des Lenkrades ist eine Leseeinheit 9 vorgesehen, die in der dargestellten Ausführungsform fest mit dem Fahrzeug verbunden ist, d.h. stationär ist. In Figur 7 ist die Funktionsweise des in Figur 6 dargestellten Dokumentationssystems schematisch gezeigt. Von den Identifikationselementen 2l und 2ll, die in den Deformationselementen 1l und 1II vorgesehen sind, werden Daten mittels Antennen 7l und 7ll an die Antenne 8 der Leseeinheit 9 übertragen. Diese Leseeinheit 9 ist Teil der zentralen Einheit 14 des Dokumentationssystems. Weitere Bestandteile der zentralen Einheit 14 können Bearbeitungseinheiten sein, in denen die Daten z.B. zu optischen Signalen verarbeitet werden, oder mit anderen Werten verglichen werden. In der dargestellten Ausführungsform ist die zentrale Einheit 14 mit einer Wegfahrsperre 13 verbunden. Die von den Deformationselementen 1l, 1ll, etc. empfangenen Daten werden hierbei in der zentralen Einheit 14 mit Soll-Daten verglichen. Stimmt eines der empfangenen Merkmale nicht mit dem vorgegebenen Merkmal überein, so wird die Wegfahrsperre 13 aktiviert und das Fahrzeug kann nicht bewegt werden. Durch ein solches Dokumentationssystem kann insbesondere sichergestellt werden, dass nach Reparaturarbeiten wieder alle Deformationselemente 1 in der richtigen Position eingebaut wurden. Wird die zentrale Einheit 14 als mobile Einheit gestaltet, so kann das Dokumentationssystem ideal für die Überwachung der Montage von Fahrzeugen verwendet werden. Dabei kann die zentrale Einheit 14 in die Nähe der Deformationselemente 1l, 1ll, etc. gebracht werden und so deren Präsenz und korrekter Einbau überprüft werden.

## Patentansprüche

1. Deformationselement (1) für die Verwendung in einem Fahrzeug, **dadurch gekennzeichnet, dass** es mindestens ein passives, induktives Identifikationselement (2), das eine Nur-Lesefunktion aufweist, als integralen Bestandteil umfasst.

2. Deformationselement gemäß Anspruch 1, **dadurch gekennzeichnet, dass** das Identifikationselement (2) in dem Deformationselement (1) unlösbar eingearbeitet, insbesondere eingeschäumt oder umspritzt, ist.

3. Deformationselement gemäß einem der Ansprüche 1 oder 2, **dadurch gekennzeichnet, dass** das Identifikationselement (2) unlösbar auf dem Deformationselement (1) angebracht ist.

4. Deformationselement gemäß einem der Ansprüche 1 bis 3, **dadurch gekennzeichnet, dass** das Identifikationselement (2) einen Transponder (6) darstellt.

5. Deformationselement gemäß einem der Ansprüche 1 bis 3, **dadurch gekennzeichnet, dass** das Identifikationselement (2) eine Spule (11) darstellt.

6. Dokumentationssystem, das mindestens ein Deformationselement (1l, 1ll) mit einem passiven, induktiven Identifikationselement (2l, 2ll), das eine Nur-Lesefunktion aufweist, als integralen Bestandteil umfasst, und eine zentrale Einheit (14) aufweist, in der in den einzelnen Informationselementen (2l, 2ll) abgelegte Information abfragbar und bearbeitbar sind.

7. Dokumentationssystem gemäß Anspruch 6, **dadurch gekennzeichnet, dass** mit der zentralen Einheit (14) in Abhängigkeit von der in den Identifikationselementen abgelegten Information eine Warn- oder Sicherheitseinrichtung, insbesondere eine Wegfahrsperre (13) aktivierbar ist.
